# EUROPEAN PATENT SPECIFICATION

(11) **EP 4 607 246 B1**
(45) Date of publication and mention of the grant of the patent: **18.11.2026**
(21) Application number: 24222724.7
(22) Date of filing: 23.12.2024
(51) Int. Cl.: G01S 19/14, G08G 1/00, H04W 4/021

(54) **RESOLUTION AGNOSTIC GATE DETECTION METHOD USING TEMPORALLY-SPACED GPS PINGS**
VERFAHREN ZUR AUFLÖSUNGSUNBEWUSSTEN GATE-ERKENNUNG MIT ZEITLICH BEABSTANDETEN GPS-PINGS
PROCÉDÉ DE DÉTECTION DE PORTE AGNOSTIQUE À RÉSOLUTION UTILISANT DES PINGS GPS ESPACÉS DANS LE TEMPS

(30) Priority: 22.02.2024 US 202418584885
(43) Date of publication of application: 27.08.2025
(73) Proprietor: Trimble Inc, Westminster CO 80021 (US)
(72) Inventor: PORTER, Miles, Westminster, 80021 (US); AXEN, Ulrike, Westminster, 80021 (US)
(74) Representative: AWA Sweden AB

(56) References cited:
- CN-A- 108 733 715
- CN-A- 111 751 850
- CN-A- 112 069 272
- CN-A- 113 124 857

## Description

### BACKGROUND OF THE INVENTION

Large vehicles serve an important function in the world economy, transporting raw materials to manufacturers, food to supermarkets, everyday goods to local warehouses, among others. Many of these large vehicles may be semi-trailer trucks (or simply "semi-trucks"), which may include a combination of a tractor unit with one or more semi-trailers. When generating navigation routes for large vehicles, knowing how to access places of interest such as truck stops and rest areas is of great value to semi-truck drivers. In many instances, state-of-the-art navigation tools make a prediction on how to enter or exit a site based on how the site is connected to surrounding roads. When these predictions are incorrect, large vehicles such as semi-trucks can be put in situations that can lead to delays or safety issues.

### SUMMARY OF THE INVENTION

In accordance with the present invention, a computer-implemented method, a non-transitory computer-readable medium and a system, as set forth in the independent claims, are provided. Embodiments of the invention are claimed in the dependent claims.

### BRIEF DESCRIPTION OF THE DRAWINGS

The accompanying drawings, which are included to provide a further understanding of the disclosure, are incorporated in and constitute a part of this specification, illustrate embodiments of the disclosure and together with the detailed description serve to explain the principles of the disclosure. No attempt is made to show structural details of the disclosure in more detail than may be necessary for a fundamental understanding of the disclosure and various ways in which it may be practiced.
FIG. 1 illustrates an example of a site of interest.
FIGS. 2A-2F illustrate example steps for detecting an entrance point and an exit point for a site of interest.
FIGS. 3A-3F illustrate a real-world example for detecting an entrance point and an exit point for a site of interest.
FIG. 4 illustrates an example server-assisted method for detecting an entrance point and an exit point for a site of interest.
FIG. 5 illustrates an example method for detecting an entrance point and an exit point for a site of interest.
FIG. 6 illustrates an example computer system comprising various hardware elements.

In the appended figures, similar components and/or features may have the same numerical reference label. Further, various components of the same type may be distinguished by following the reference label with a letter or by following the reference label with a dash followed by a second numerical reference label that distinguishes among the similar components and/or features. If only the first numerical reference label is used in the specification, the description is applicable to any one of the similar components and/or features having the same first numerical reference label, irrespective of the suffix.

### DETAILED DESCRIPTION OF THE INVENTION

Operators of large vehicles may need to understand how to enter and exit sites in order to safely complete their trips. In many cases, the precise entrance and exit locations play an important role in determining the planned route for a vehicle. Generally, navigation software includes only a generic geolocation for sites, and the route planning routine makes a prediction on how to enter or exit a site based on how the site is connected to surrounding roads. When these predictions are incorrect, large vehicles such as semi-truck trailers (or simply "semi-trucks") can be put in situations that can lead to delays or safety issues. As such, new techniques for detecting precise gate locations are needed.

Embodiments of the present disclosure solve these and other issues by combining the general geolocation of a site and its geofence information with large numbers of temporally-spaced satellite pings from multiple transmitting vehicles to perform a gate detection method. The satellite pings are detected by global navigation satellite system (GNSS) receivers located at these vehicles that may receive GNSS signals (such as Global Positioning System (GPS) signals) from multiple satellites. Such GNSS receivers may be mounted to the vehicles or carried by the vehicle operators (e.g., incorporated in a personal mobile device carried by the driver). The satellite pings may be collected by a centralized server computer on the order of millions of pings per day. For a particular site, satellite pings may be correlated with cells (e.g., H3 cells) arranged on the border of the geofence for the site to identify satellite pings falling within the cells and the vehicle identifiers for the vehicles that detected the corresponding pings.

In order to identify the entrance and exit cells, each of the satellite pings falling within the cells along the geofence border are classified as either entrance satellite pings or exit satellite pings. To accomplish this, the preceding or subsequent satellite pings for the same vehicle are examined. If an immediately preceding satellite ping was outside the geofence, the satellite ping can be classified as an entrance satellite ping, whereas if an immediately subsequent satellite ping was outside the geofence, the satellite ping can be classified as an exit satellite ping. Two lists may then be compiled containing the entrance satellite pings and exit satellite pings. Statistical distributions for the two lists can be computed and the number of each type of satellite ping that falls within each of the cells can be determined. The counts are compared between the cells and those cells having the most satellite pings are candidates for entrance and exit points.

In a real-world test study, the described gate detection method was performed on 82 randomly selected sites in the United States. The results of the test study were verified by visual inspection and/or by visiting the sites to confirm the gate locations. The success rates for entrance identification and exit identification were 97.6% and 100%, respectively.

In the following description, various examples will be described. For purposes of explanation, specific configurations and details are set forth in order to provide a thorough understanding of the examples.

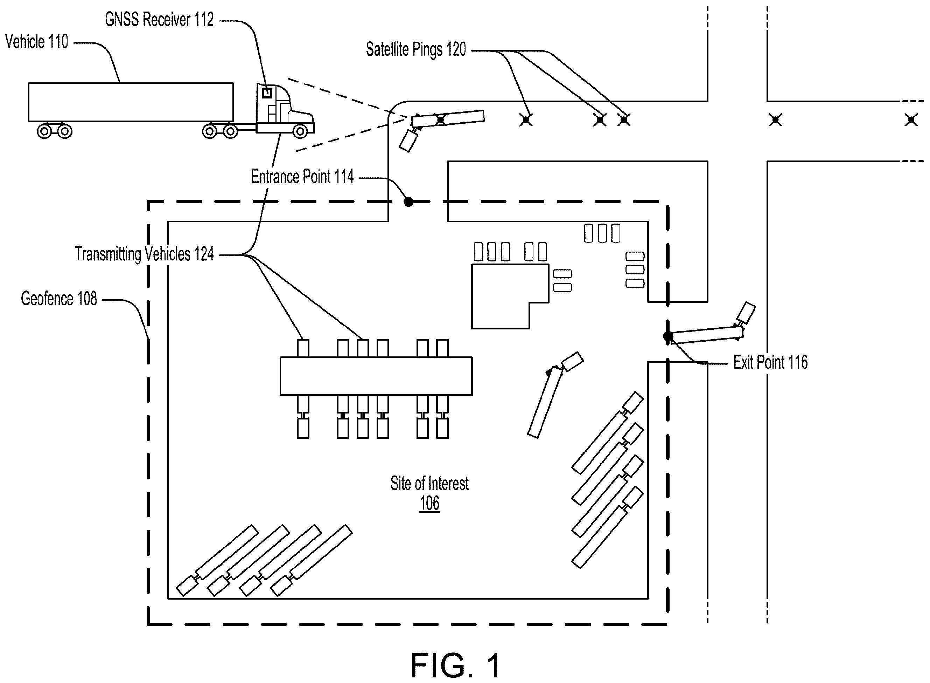

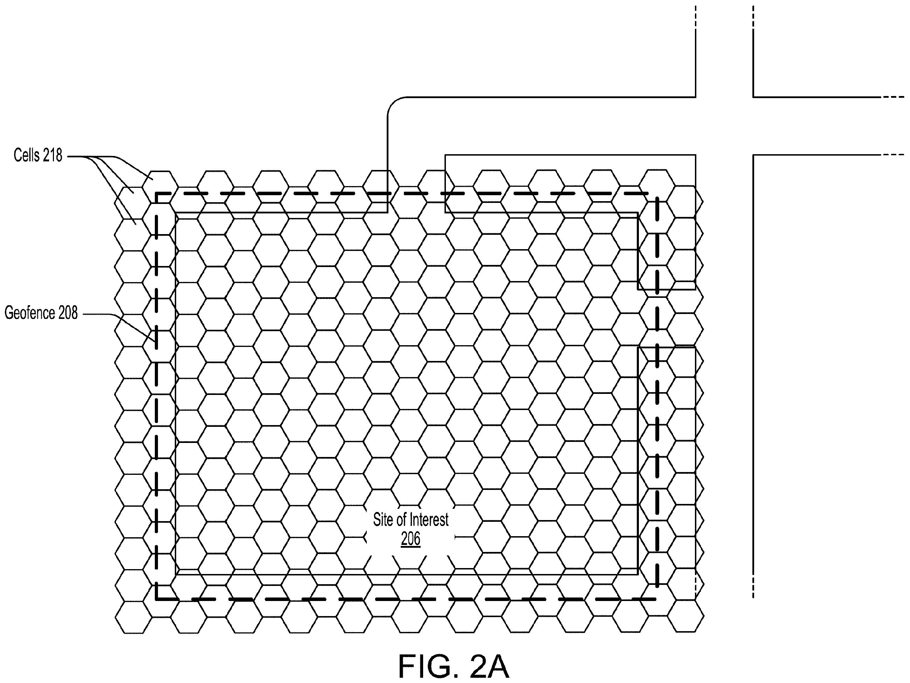

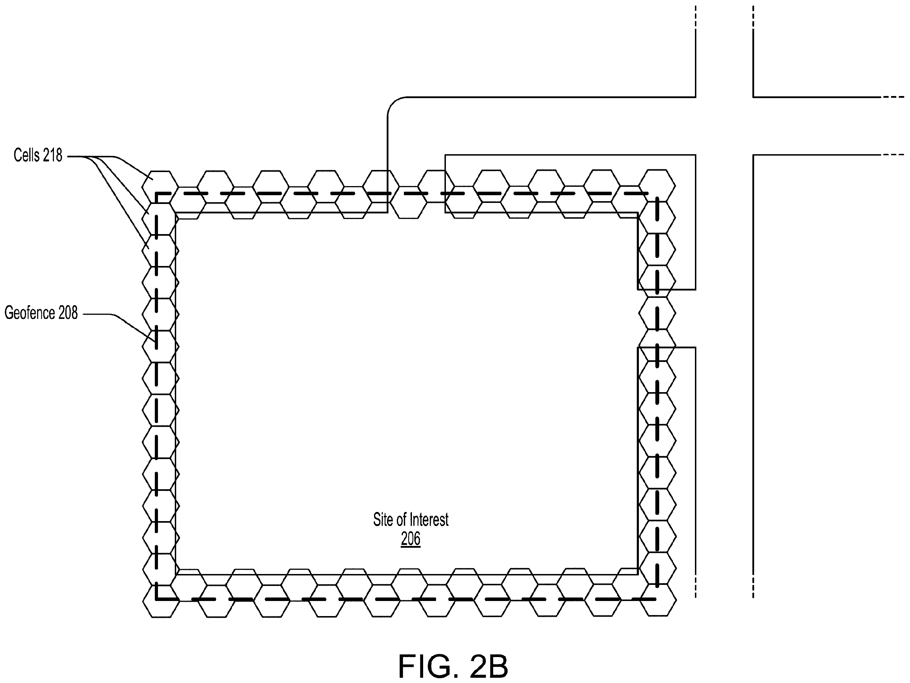

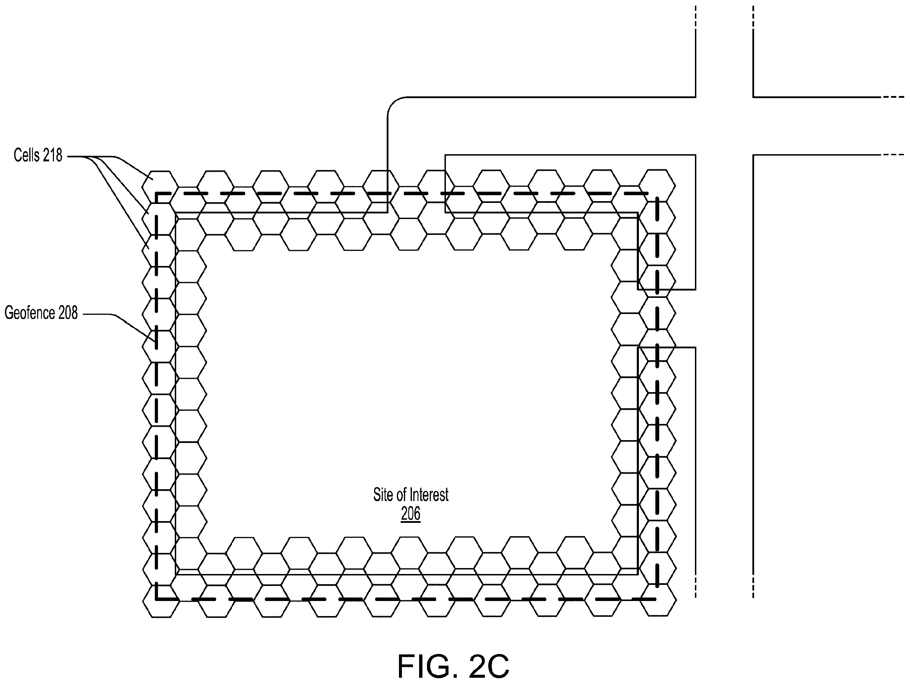

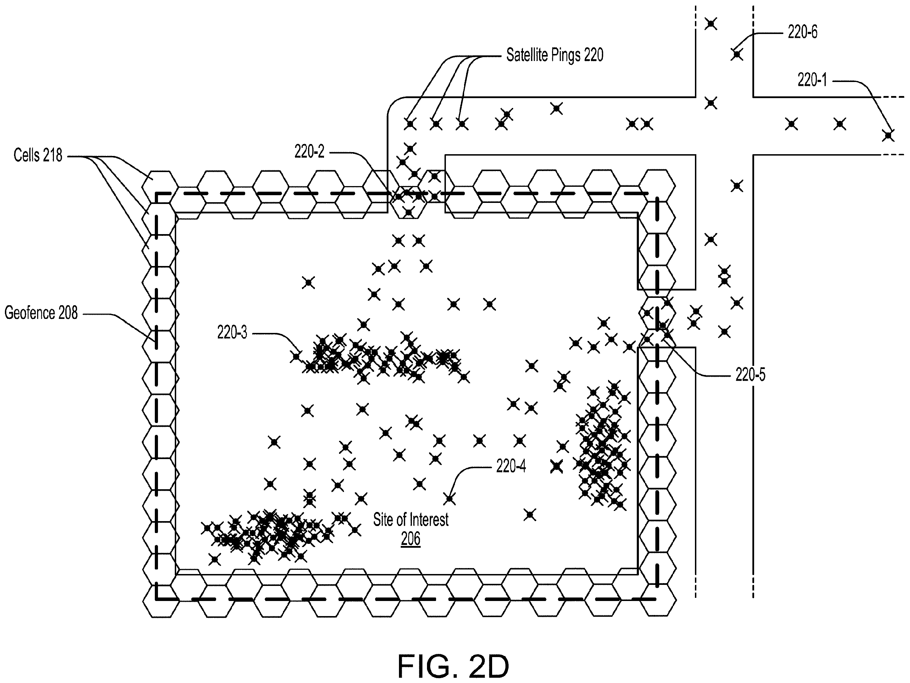

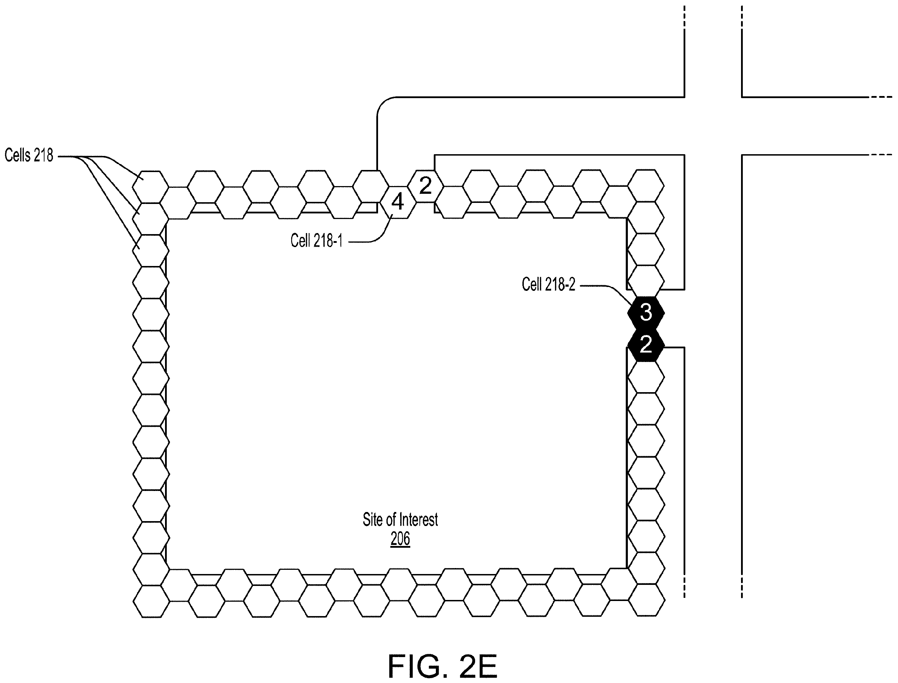

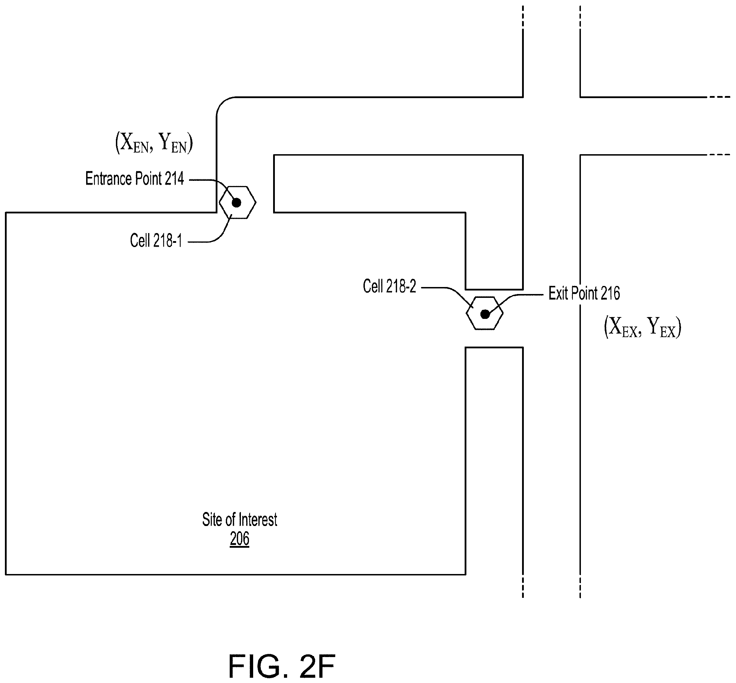

The figures herein follow a numbering convention in which the first digit or digits correspond to the figure number and the remaining digits identify an element or component in the figure. Similar elements or components between different figures may be identified by the use of similar digits. For example, 108 may reference element "08" in FIG. 1, and a similar element may be referenced as 208 in FIG. 2. The proportion and the relative scale of the elements provided in the figures are intended to illustrate certain embodiments of the present disclosure and should not be taken in a limiting sense.

**FIG.** 1 illustrates an example of a site of interest 106 at which vehicles may enter and exit, in accordance with some embodiments of the present disclosure. In some examples, site of interest 106 may correspond to a truck stop or a travel center where large vehicles such as semi-trucks may refuel, rest, or obtain other services and amenities. Site of interest 106 may have one or more entrances and one or more exits through which a set of transmitting vehicles 124 may enter and exit site of interest 106. For example, each of transmitting vehicles 124 may independently enter site of interest 106, remain within site of interest 106 for a period of time, and thereafter exit site of interest 106.

One aim of the present disclosure may be the accurate detection of an entrance point 114 and an exit point 116 for efficient navigation of a vehicle 110 to and from site of interest 106. To accomplish this aim, each of transmitting vehicles 124 is equipped with a GNSS receiver 112 configured to receive GNSS signals from multiple GNSS satellites. The received GNSS signals are processed to compute satellite pings 120 for transmitting vehicles 124, each of satellite pings 120 indicating a location of a vehicle in two-dimensional (2D) or three-dimensional (3D) space. In various examples, each of satellite pings 120 may include coordinates in accordance with a map projection system such as the geographic coordinate system (GCS) having latitude and longitude values, the Universal Transverse Mercator (UTM) coordinate system having easting and northing values, among other possibilities. Upon computing satellite pings 120, transmitting vehicles 124 may transmit the computed pings to a server that can store the computed pings in a database.

Each of transmitting vehicles 124 may compute and transmit multiple satellite pings 120 in accordance with a particular temporal resolution or granularity. The average temporal resolution between successive pings for each vehicle may vary over a wide range, as the gate detection method described herein is resolution agnostic. In various examples, the average temporal resolution between successive pings may be on the order of milliseconds, seconds, minutes, hours, days, or weeks. For example, in various embodiments, the average temporal resolution may be greater than or equal to 1 minute, 2 minutes, 5 minutes, 10 minutes, 20 minutes, 30 minutes, 1 hour, 2 hours, 4 hours, 12 hours, 1 day, 2 days, 4 days, 1 week, 2 weeks, 4 weeks, among other possibilities. In one example, a first vehicle may compute and transmit satellite pings 120 with a temporal resolution of 10 minutes, and may accordingly transmit new pings every 10 minutes to a server. In the same example, a second vehicle may compute and transmit satellite pings 120 with a temporal resolution of 20 minutes, and may accordingly transmit new pings every 20 minutes to the server. The server may collect satellite pings 120 from transmitting vehicles 124, including the first and second vehicles, in accordance with each vehicle's temporal resolution and perform the gate detection method to detect entrance point 114 and exit point 116 using the collected data.

In some examples, the server may obtain a geofence 108 for site of interest 106. Geofence 108 may be a virtual perimeter that completely surrounds site of interest 106 and that is defined by a set of connected coordinates. In some instances, geofence 108 may be defined so as to surround all of the property of occupied by site of interest 106. Geofence 108 may be retrieved from a public or private database, such as a maps database. In some examples, geofence 108 may be generated using a machine learning model that has been previously trained to predict a geofence based on an input comprising an overhead image of site of interest 106. It is assumed that entrance point 114 and exit point 116 pass through or are located near geofence 108.

**FIGS. 2A-2F** illustrate example steps for detecting an entrance point 214 and an exit point 216 for a site of interest 206, in accordance with some embodiments of the present disclosure. In FIG. 2A, a set of cells 218 are superimposed onto site of interest 206 and geofence 208 so as to overlap with the entirety of geofence 208. Cells 218 may comprise a tessellation of a particular shape, such as squares, hexagons, rectangles, etc. In some examples, cells 218 may correspond to cells of the H3 geospatial indexing system (i.e., H3 cells), which is a discrete global grid system with multi-precision hexagonal tiling of a sphere. The sizing of cells 218 may be selected such that each of cells 218 has a diameter of a few meters (e.g., 1, 2, 5, or 10 meters).

In FIG. 2B, the number of cells 218 are reduced to those that are near the border of geofence 208. In the example of FIG. 2B, only cells 218 that at least partially overlap with geofence 208 are kept while cells that do not overlap with geofence 208 are removed. In the alternative example of FIG. 2C, cells 218 are again reduced to those that are near the border of geofence 208. However, cells 218 that either at least partially overlap with geofence 208 or those that (i) touch another cell that at least partially overlaps with geofence 208 and (ii) are inside geofence 208 are kept while remaining cells are removed.

In FIG. 2D, using the resulting cells from FIG. 2B, a subset of satellite pings 220 is identified that include satellite pings that are within cells 218. For the purposes of illustration, FIG. 2D further shows those of satellite pings 220 that are outside cells 218, both inside and outside geofence 208. It can be observed that the subset of satellite pings 220 that are identified as being within cells 218 can be a small percentage of the total number of satellite pings 220 (e.g., less than 0.001% in some examples), particularly in situations where the geographic region encompassing all of satellite pings 220 is large (e.g., an entire county, state, or country).

In some embodiments, the subset of satellite pings 220 may be added to one of two lists, a first list including those of satellite pings 220 that are considered to correspond to vehicles entering site of interest 206 and a second list including those of satellite pings 220 that are considered to correspond to vehicles exiting site of interest 206. To compile the two lists, each satellite ping in the subset may be analyzed to determine a vehicle identifier for the satellite ping, and satellite pings (not in the subset) preceding or following that satellite ping in time and having the same vehicle identifier are analyzed to determine whether the vehicle was entering or exiting.

In the illustrated example, a satellite ping 220-2 having a first vehicle identifier is determined to be within cells 218. Other satellite pings (not in the subset) having the same vehicle identifier and that precede or follow (e.g., immediately or separated by one or more pings) satellite ping 220-2 in time are then identified, which include satellite ping 220-1 that precedes satellite ping 220-2 and satellite ping 220-3 that follows satellite ping 220-3. In response to determining that satellite ping 220-1 precedes satellite ping 220-2 and is outside geofence 208 and/or that satellite ping 220-3 follows satellite ping 220-2 and is inside geofence 208, satellite ping 220-2 is classified as an entrance satellite ping and is added to the first list corresponding to vehicles entering site of interest 206.

Further in the illustrated example, a satellite ping 220-5 having a second vehicle identifier is determined to be within cells 218. Other satellite pings (not in the subset) having the same vehicle identifier and that precede or follow (e.g., immediately or separated by one or more pings) satellite ping 220-5 in time are then identified, which include satellite ping 220-4 that precedes satellite ping 220-5 and satellite ping 220-6 that follows satellite ping 220-5. In response to determining that satellite ping 220-4 precedes satellite ping 220-5 and is inside geofence 208 and/or that satellite ping 220-6 follows satellite ping 220-5 and is outside geofence 208, satellite ping 220-5 is classified as an exit satellite ping and is added to the second list corresponding to vehicles existing site of interest 206.

In FIG. 2E, the number of satellite pings 220 that have been compiled into the first and second lists that are in each of cells 218 are counted. Each of cells 218 may therefore have a count of satellite pings 220 that are in the first list (or "count of entrance satellite pings") and a count of satellite pings 220 that are in the second list (or "count of exit satellite pings"). Cells 218 with counts of entrance satellite pings displayed are shown in FIG. 2E with black numbers against white backgrounds and cells 218 with counts of exit satellite pings displayed are shown with white numbers against black backgrounds. Cells 218 with counts equal to zero are displayed as blank white cells. In some examples (but not the illustrated example), a single cell may have a non-zero count of entrance satellite pings and a non-zero count of exit satellite pings.

After counting the number of entrance satellite pings and exit satellite pings that are in each of cells 218, one or more maximum values may be identified from the non-zero counts. For example, one or more first maximum values may be identified from the counts of entrance satellite pings and one or more second maximum values may be identified from the counts of exit satellite pings. In the illustrated example, cell 218-1 is identified as having a maximum value of entrance satellite pings (i.e., four) and cell 218-2 is identified as having a maximum value of exit satellite pings (i.e., three). In FIG. 2F, it is shown that entrance point 214 is assigned to cell 218-1 based on cell 218-1 having the maximum value of entrance satellite pings and exit point 216 is assigned to cell 218-2 based on cell 218-2 having the maximum value of exit satellite pings. Entrance point 214 and exit point 216 may be set to the center locations of cells 218-1 and 218-2, respectively. In some examples, entrance point 214 and exit point 216 may be set to the midpoint or weighted midpoint between the center locations of the cells having the two maximum values from the counts of entrance satellite pings and exit satellite pings, respectively.

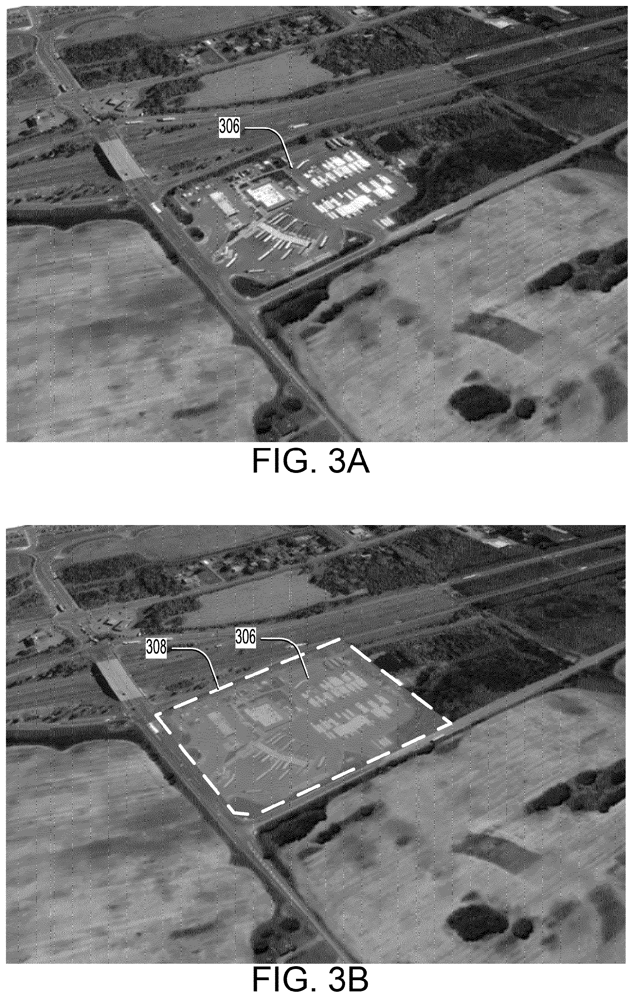

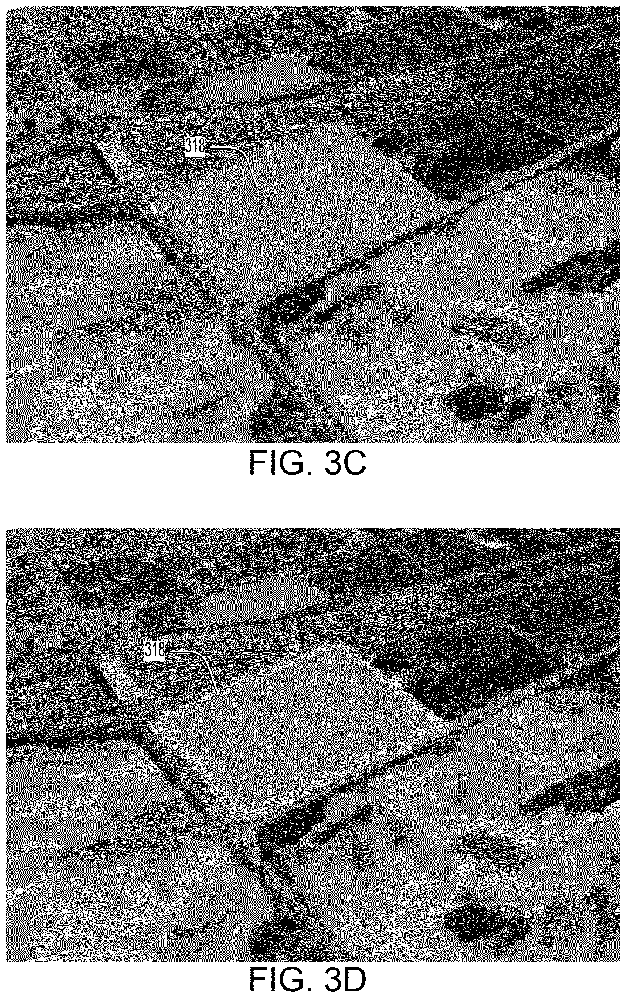

**FIGS. 3A-3F** illustrate a real-world example for detecting an entrance point 314 and an exit point 316 for a site of interest 306, in accordance with some embodiments of the present disclosure. FIG. 3A shows a site of interest 306 having multiple potential entrance and exit points with the surrounding roads. In such a case, it may be desirable to provide an operator of a vehicle with exact locations of the entrance and exit points for site of interest 306. In FIG. 3B, a geofence 308 is obtained for site of interest 306. In FIG. 3C, a set of cells 318 are superimposed onto site of interest 306 and geofence 308 so as to overlap with the entirety of geofence 308.

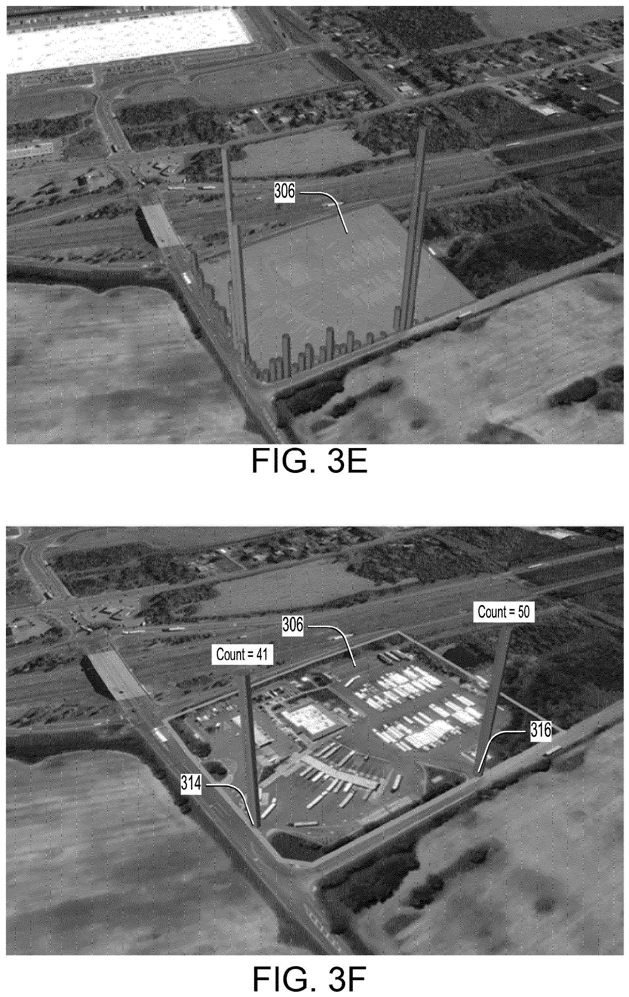

In FIG. 3D, the number of cells 318 are reduced to those that are near the border of geofence 308 (shown with a lighter shading in FIG. 3D). In the example of FIG. 3D, only cells 318 that at least partially overlap with geofence 308 are kept while cells that do not overlap with geofence 308 are removed. FIG. 3E shows a 3D histogram for counts of entrance satellite pings and exit satellite pings overlaid onto site of interest 306. Each column that extends vertically from each cell has a height that is proportional to the count of either entrance satellite pings or exit satellite pings, whichever is greater for that particular cell. In FIG. 3F, after counting of the number of entrance satellite pings and exit satellite pings that are in each of cells 318, a maximum value of 41 is identified from the counts of entrance satellite pings and a maximum value of 50 is identified from the counts of exit satellite pings. Entrance point 314 is then assigned to the cell having the maximum value of entrance satellite pings and exit point 316 is assigned to the cell having the maximum value of exit satellite pings.

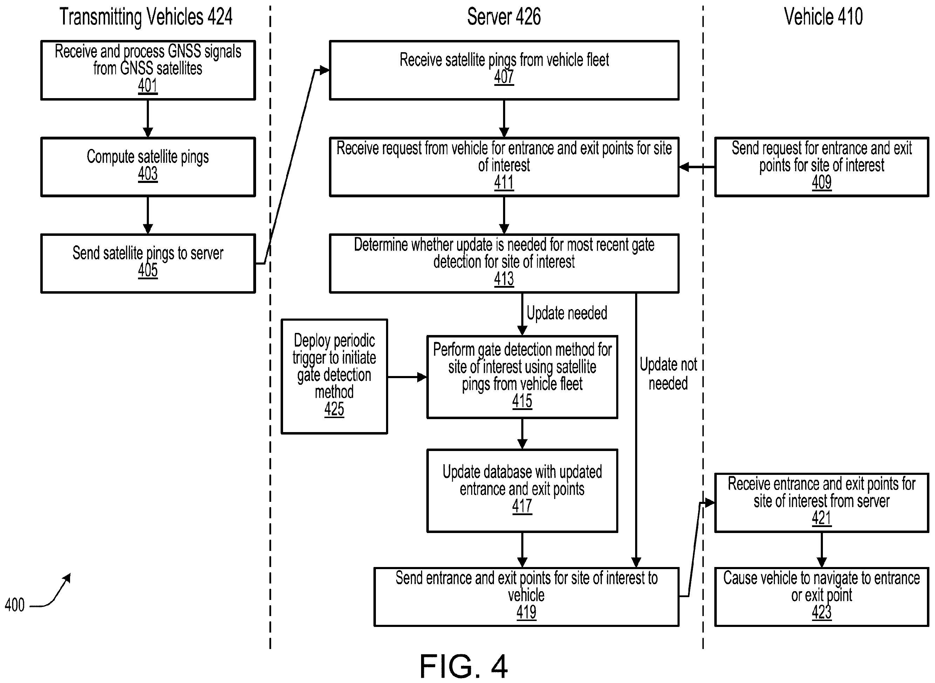

**FIG.** 4 illustrates an example server-assisted method 400 for detecting an entrance point and an exit point for a site of interest, in accordance with some embodiments of the present disclosure. Steps of method 400 may be performed in any order and/or in parallel, and one or more steps of method 400 may be optionally performed. One or more steps of method 400 may be performed by one or more processors, such as those included in a server computer located remote from a vehicle or an onboard computer located at a vehicle. Method 400 may be implemented as a computer-readable medium or computer program product comprising instructions which, when the program is executed by one or more processors, cause the one or more processors to carry out the steps of method 400.

At step 401, GNSS signals from multiple GNSS satellites are received and processed at a set of transmitting vehicles (e.g., transmitting vehicles 124, 424). Each of the set of transmitting vehicles may include a GNSS receiver (e.g., GNSS receiver 112) that receives the GNSS signals.

At step 403, satellite pings (e.g., satellite pings 120, 220) are computed at the set of transmitting vehicles based on the GNSS signals.

At step 405, the satellite pings are sent (e.g., wirelessly transmitted via antennas) from the set of transmitting vehicles to a server (e.g., server 426).

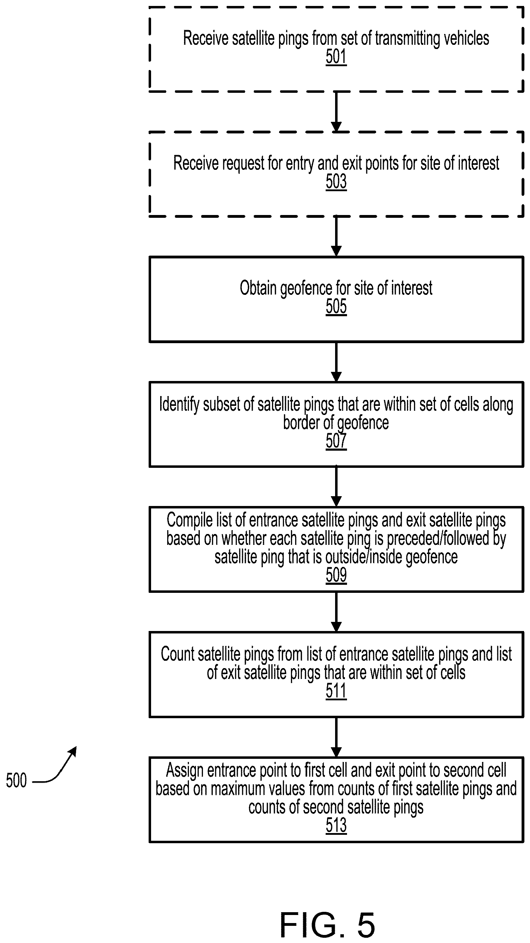

At step 407, the satellite pings are received (e.g., wirelessly received via an antenna) at the server from the set of transmitting vehicles. In some examples, the average temporal resolution of the satellite pings (i.e., the average amount of time between successive satellite pings) is greater than one minute. In some examples, the satellite pings are received from the set of transmitting vehicles over a time duration of at least one week. In some examples, the satellite pings are stored in a satellite ping database. In some examples, each of the satellite pings can be encoded with information indicating which of a set of cells (e.g., cells 218, 318) the particular satellite ping is located within. Such encoded information may be used in step 507 in FIG. 5 when identifying the subset of the satellite pings that are within the particular set of cells along a border of a geofence.

At step 409, a request for an entrance point (e.g., entrance points 114, 214, 314) and an exit point (e.g., exit points 116, 216, 316) for a site of interest (e.g., site of interests 106, 206, 306) is sent (e.g., wirelessly transmitted via an antenna) from a vehicle (e.g., vehicles 110, 410) to the server. The vehicle may be included in or separate from the set of transmitting vehicles. The vehicle may be a semi-truck.

At step 411, the request for the entrance point and the exit point is received (e.g., wirelessly received via an antenna) at the server from the vehicle.

At step 413, the server determines whether the entrance point and the exit point that are currently stored in a database need to be updated. If the entrance point and the exit point need to be updated, or if the entrance point and the exit point are not currently stored in the database, method 400 proceeds to step 415. In some examples, the entrance point and the exit point may need to be updated if a particular amount of time has passed since the last update (since the point(s) were last detected). In various examples, if 1 week, 2 weeks, 3 weeks, 1 month, 2 months, 4 months, 6 months, 1 year, 2 years, or 4 years have passed since the entrance point and the exit point currently stored in the database were last updated, the server may determine that the entrance point and the exit point need to be updated and method 400 may proceed to step 415.

At step 415, a gate detection method is performed at the server. In some examples, the gate detection method may include one or more steps of method 500 described in reference to FIG. 5.

At step 417, the server updates the database with the entrance point and the exit point computed at step 415.

At step 419, the entrance point and the exit point for the site of interest are sent (e.g., wirelessly transmitted via an antenna) from the server to the vehicle.

At step 421, the entrance point and the exit point for the site of interest are received (e.g., wirelessly received via an antenna) at the vehicle from the server.

At step 423, the vehicle is caused to navigate to the entrance point or the exit point. In some examples, the vehicle may include a navigation computer that computes a route from the vehicle's current location to the entrance point or the exit point. In some examples, the vehicle may be autonomously driven to the entrance point or the exit point.

At step 425, optionally, the server may deploy a periodic trigger that causes step 415 to be performed on a periodic basis in accordance with a predetermined period, independent of the request being received from the vehicle at step 411. In various examples, the predetermined period between successive triggers of step 415 may be 1 week, 2 weeks, 3 weeks, 1 month, 2 months, 4 months, 6 months, 1 year, 2 years, 4 years, among other possibilities.

**FIG.** 5 illustrates an example method 500 for detecting an entrance point and an exit point for a site of interest, in accordance with some embodiments of the present disclosure. Steps of method 500 may be performed in any order and/or in parallel, and one or more steps of method 500 may be optionally performed. One or more steps of method 500 may be performed by one or more processors, such as those included in a server computer located remote from a vehicle or an onboard computer located at a vehicle. Method 500 may be implemented as a computer-readable medium or computer program product comprising instructions which, when the program is executed by one or more processors, cause the one or more processors to carry out the steps of method 500.

At step 501, satellite pings (e.g., satellite pings 120, 220) are received from a set of transmitting vehicles (e.g., transmitting vehicles 124, 424). The satellite pings may be computed based on GNSS signals received at the set of transmitting vehicles. Each of the set of transmitting vehicles may include a GNSS receiver (e.g., GNSS receiver 112) that receives the GNSS signals. In some examples, the average temporal resolution of the satellite pings (i.e., the average amount of time between successive satellite pings) is greater than one minute. In some examples, the satellite pings are received from the set of transmitting vehicles over a time duration of at least one week.

At step 503, a request for an entrance point (e.g., entrance points 114, 214, 314) and an exit point (e.g., exit points 116, 216, 316) for a site of interest (e.g., site of interests 106, 206, 306) is received (e.g., wirelessly transmitted via an antenna) from a vehicle (e.g., vehicles 110, 410). The request may be received at a server (e.g., server 426) located remote from the vehicle. The vehicle may be included in or separate from the set of transmitting vehicles. The vehicle may be a semi-truck.

At step 505, a geofence (e.g., geofences 108, 208, 308) is obtained for the site of interest. The geofence may be retrieved from a maps database or, in some examples, the geofence may be generated using a trained machine-learning model by inputting an overhead image of the site of interest into the machine-learning model.

At step 507, a subset of the satellite pings that are within a set of cells (e.g., cells 218, 318) along a border of the geofence are identified. In some examples, method 500 may further include determining or placing the set of cells along the border of the geofence such that each of the set of cells at least partially overlaps the border of the geofence. In some examples, each of the satellite pings can be previously encoded with information indicating which cell the particular satellite ping is located within. Such encoded information may be used (e.g., using a search function) to identify the subset of the satellite pings that are within the set of cells along the border of the geofence.

At step 509, a list of entrance satellite pings and a list of exit satellite pings are compiled based on the subset of the satellite pings. Step 509 may include, for each satellite ping of the subset of the satellite pings, in response to determining that the satellite ping is preceded by a satellite ping for a same vehicle that is outside the geofence or is followed by a satellite ping for the same vehicle that is inside the geofence, adding the satellite ping to the list of entrance satellite pings, or, in response to determining that the satellite ping is preceded by a satellite ping for the same vehicle that is inside the geofence or is followed by a satellite ping for the same vehicle that is outside the geofence, adding the satellite ping to the list of exit satellite pings.

At step 511, the satellite pings from the list of entrance satellite pings and the list of exit satellite pings that are within each of the set of cells are counted to respectively produce counts of entrance satellite pings and counts of exit satellite pings.

At step 513, the entrance point is assigned to a first cell from the set of cells and the exit point is assigned to a second cell from the set of cells respectively based on maximum values from the counts of entrance satellite pings and the counts of exit satellite pings. A count for the first cell may be a maximum value from the counts of entrance satellite pings and a count for the second cell may be a maximum value from the counts of exit satellite pings. In one example, any one of the set of cells having a count of entrance satellite pings or a count of exit satellite pings at least 2 standard deviations above the mean is considered to be a candidate for the entrance point and the exit point, respectively. Such candidates can be filtered down to select one or more final entrance/exit points or each candidate can be used. In some examples, the entrance point or the exit point can be set to the midpoint or weighted midpoint between the center locations of the cells having the two maximum values from the counts of entrance satellite pings and exit satellite pings, respectively.

In some examples, method 500 may further include assigning a second entrance point to a third cell from the set of cells based on the maximum values from the counts of entrance satellite pings and the counts of exit satellite pings. In some examples, method 500 may further include assigning a second exit point to a fourth cell from the set of cells based on the maximum values from the counts of entrance satellite pings and the counts of exit satellite pings. A count for the third cell may be within 50% of a count for the first cell, and a count for the fourth cell may be within 50% of a count for the second cell.

In some examples, method 500 may further include determining a vehicle route for the vehicle based on the entrance point or the exit point for the site of interest. In some examples, method 500 may further include causing the vehicle to navigate to the entrance point or the exit point. In some examples, the vehicle may include a navigation computer that computes the vehicle route from the vehicle's current location to the entrance point or the exit point. In some examples, the vehicle may be autonomously driven to the entrance point or the exit point.

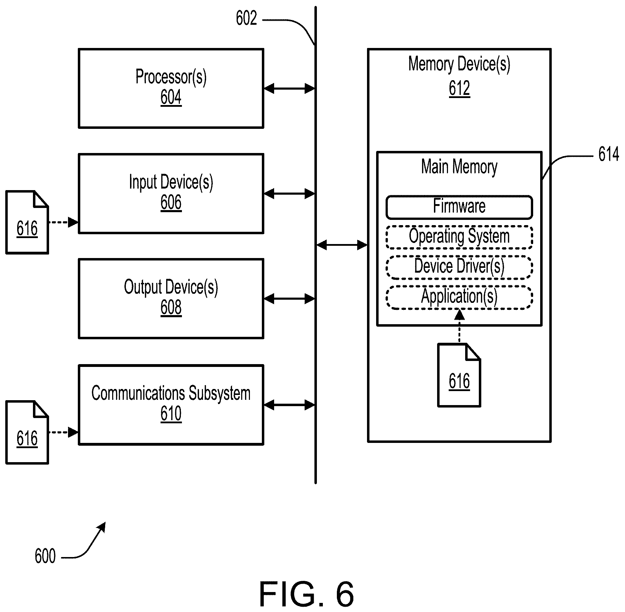

**FIG.** 6 illustrates an example computer system 600 comprising various hardware elements, in accordance with some embodiments of the present disclosure. Computer system 600 may be incorporated into or integrated with devices described herein and/or may be configured to perform some or all of the steps of the methods provided by various embodiments. It should be noted that FIG. 6 is meant only to provide a generalized illustration of various components, any or all of which may be utilized as appropriate. FIG. 6, therefore, broadly illustrates how individual system elements may be implemented in a relatively separated or relatively more integrated manner.

In the illustrated example, computer system 600 includes a communication medium 602, one or more processor(s) 604, one or more input device(s) 606, one or more output device(s) 608, a communications subsystem 610, and one or more memory device(s) 612. Computer system 600 may be implemented using various hardware implementations and embedded system technologies. For example, one or more elements of computer system 600 may be implemented within an integrated circuit (IC), an application-specific integrated circuit (ASIC), an application-specific standard product (ASSP), a field-programmable gate array (FPGA), such as those commercially available by XILINX^{®}, INTEL^{®}, or LATTICE SEMICONDUCTOR^{®}, a system-on-a-chip (SoC), a microcontroller, a printed circuit board (PCB), and/or a hybrid device, such as an SoC FPGA, among other possibilities.

The various hardware elements of computer system 600 may be communicatively coupled via communication medium 602. While communication medium 602 is illustrated as a single connection for purposes of clarity, it should be understood that communication medium 602 may include various numbers and types of communication media for transferring data between hardware elements. For example, communication medium 602 may include one or more wires (e.g., conductive traces, paths, or leads on a PCB or integrated circuit (IC), microstrips, striplines, coaxial cables), one or more optical waveguides (e.g., optical fibers, strip waveguides), and/or one or more wireless connections or links (e.g., infrared wireless communication, radio communication, microwave wireless communication), among other possibilities.

In some embodiments, communication medium 602 may include one or more buses that connect the pins of the hardware elements of computer system 600. For example, communication medium 602 may include a bus that connects processor(s) 604 with main memory 614, referred to as a system bus, and a bus that connects main memory 614 with input device(s) 606 or output device(s) 608, referred to as an expansion bus. The system bus may itself consist of several buses, including an address bus, a data bus, and a control bus. The address bus may carry a memory address from processor(s) 604 to the address bus circuitry associated with main memory 614 in order for the data bus to access and carry the data contained at the memory address back to processor(s) 604. The control bus may carry commands from processor(s) 604 and return status signals from main memory 614. Each bus may include multiple wires for carrying multiple bits of information and each bus may support serial or parallel transmission of data.

Processor(s) 604 may include one or more central processing units (CPUs), graphics processing units (GPUs), neural network processors or accelerators, digital signal processors (DSPs), and/or other general-purpose or special-purpose processors capable of executing instructions. A CPU may take the form of a microprocessor, which may be fabricated on a single IC chip of metal-oxide-semiconductor field-effect transistor (MOSFET) construction. Processor(s) 604 may include one or more multi-core processors, in which each core may read and execute program instructions concurrently with the other cores, increasing speed for programs that support multithreading.

Input device(s) 606 may include one or more of various user input devices such as a mouse, a keyboard, a microphone, as well as various sensor input devices, such as an image capture device, a temperature sensor (e.g., thermometer, thermocouple, thermistor), a pressure sensor (e.g., barometer, tactile sensor), a movement sensor (e.g., accelerometer, gyroscope, tilt sensor), a light sensor (e.g., photodiode, photodetector, charge-coupled device), and/or the like. Input device(s) 606 may also include devices for reading and/or receiving removable storage devices or other removable media. Such removable media may include optical discs (e.g., Blu-ray discs, DVDs, CDs), memory cards (e.g., CompactFlash card, Secure Digital (SD) card, Memory Stick), floppy disks, Universal Serial Bus (USB) flash drives, external hard disk drives (HDDs) or solid-state drives (SSDs), and/or the like.

Output device(s) 608 may include one or more of various devices that convert information into human-readable form, such as without limitation a display device, a speaker, a printer, a haptic or tactile device, and/or the like. Output device(s) 608 may also include devices for writing to removable storage devices or other removable media, such as those described in reference to input device(s) 606. Output device(s) 608 may also include various actuators for causing physical movement of one or more components. Such actuators may be hydraulic, pneumatic, electric, and may be controlled using control signals generated by computer system 600.

Communications subsystem 610 may include hardware components for connecting computer system 600 to systems or devices that are located external to computer system 600, such as over a computer network. In various embodiments, communications subsystem 610 may include a wired communication device coupled to one or more input/output ports (e.g., a universal asynchronous receiver-transmitter (UART)), an optical communication device (e.g., an optical modem), an infrared communication device, a radio communication device (e.g., a wireless network interface controller, a BLUETOOTH^{®} device, an IEEE 802.11 device, a Wi-Fi device, a Wi-Max device, a cellular device), among other possibilities.

Memory device(s) 612 may include the various data storage devices of computer system 600. For example, memory device(s) 612 may include various types of computer memory with various response times and capacities, from faster response times and lower capacity memory, such as processor registers and caches (e.g., L0, L1, L2), to medium response time and medium capacity memory, such as random-access memory (RAM), to lower response times and lower capacity memory, such as solid-state drives and hard drive disks. While processor(s) 604 and memory device(s) 612 are illustrated as being separate elements, it should be understood that processor(s) 604 may include varying levels of on-processor memory, such as processor registers and caches that may be utilized by a single processor or shared between multiple processors.

Memory device(s) 612 may include main memory 614, which may be directly accessible by processor(s) 604 via the address and data buses of communication medium 602. For example, processor(s) 604 may continuously read and execute instructions stored in main memory 614. As such, various software elements may be loaded into main memory 614 to be read and executed by processor(s) 604 as illustrated in FIG. 6. Typically, main memory 614 is volatile memory, which loses all data when power is turned off and accordingly needs power to preserve stored data. Main memory 614 may further include a small portion of non-volatile memory containing software (e.g., firmware, such as BIOS) that is used for reading other software stored in memory device(s) 612 into main memory 614. In some embodiments, the volatile memory of main memory 614 is implemented as RAM, such as dynamic random-access memory (DRAM), and the non-volatile memory of main memory 614 is implemented as read-only memory (ROM), such as flash memory, erasable programmable read-only memory (EPROM), or electrically erasable programmable read-only memory (EEPROM).

Computer system 600 may include software elements, shown as being currently located within main memory 614, which may include an operating system, device driver(s), firmware, compilers, and/or other code, such as one or more application programs, which may include computer programs provided by various embodiments of the present disclosure. Merely by way of example, one or more steps described with respect to any methods discussed above, may be implemented as instructions 616, which are executable by computer system 600. In one example, such instructions 616 may be received by computer system 600 using communications subsystem 610 (e.g., via a wireless or wired signal that carries instructions 616), carried by communication medium 602 to memory device(s) 612, stored within memory device(s) 612, read into main memory 614, and executed by processor(s) 604 to perform one or more steps of the described methods. In another example, instructions 616 may be received by computer system 600 using input device(s) 606 (e.g., via a reader for removable media), carried by communication medium 602 to memory device(s) 612, stored within memory device(s) 612, read into main memory 614, and executed by processor(s) 604 to perform one or more steps of the described methods.

In some embodiments of the present disclosure, instructions 616 are stored on a computer-readable storage medium (or simply computer-readable medium). Such a computer-readable medium may be non-transitory and may therefore be referred to as a non-transitory computer-readable medium. In some cases, the non-transitory computer-readable medium may be incorporated within computer system 600. For example, the non-transitory computer-readable medium may be one of memory device(s) 612 (as shown in FIG. 6). In some cases, the non-transitory computer-readable medium may be separate from computer system 600. In one example, the non-transitory computer-readable medium may be a removable medium provided to input device(s) 606 (as shown in FIG. 6), such as those described in reference to input device(s) 606, with instructions 616 being read into computer system 600 by input device(s) 606. In another example, the non-transitory computer-readable medium may be a component of a remote electronic device, such as a mobile phone, that may wirelessly transmit a data signal that carries instructions 616 to computer system 600 and that is received by communications subsystem 610 (as shown in FIG. 6).

Instructions 616 may take any suitable form to be read and/or executed by computer system 600. For example, instructions 616 may be source code (written in a human-readable programming language such as Java, C, C++, C#, Python), object code, assembly language, machine code, microcode, executable code, and/or the like. In one example, instructions 616 are provided to computer system 600 in the form of source code, and a compiler is used to translate instructions 616 from source code to machine code, which may then be read into main memory 614 for execution by processor(s) 604. As another example, instructions 616 are provided to computer system 600 in the form of an executable file with machine code that may immediately be read into main memory 614 for execution by processor(s) 604. In various examples, instructions 616 may be provided to computer system 600 in encrypted or unencrypted form, compressed or uncompressed form, as an installation package or an initialization for a broader software deployment, among other possibilities.

In one aspect of the present disclosure, a system (e.g., computer system 600) is provided to perform methods in accordance with various embodiments of the present disclosure. For example, some embodiments may include a system comprising one or more processors (e.g., processor(s) 604) that are communicatively coupled to a non-transitory computer-readable medium (e.g., memory device(s) 612 or main memory 614). The non-transitory computer-readable medium may have instructions (e.g., instructions 616) stored therein that, when executed by the one or more processors, cause the one or more processors to perform the methods described in the various embodiments.

In another aspect of the present disclosure, a computer-program product that includes instructions (e.g., instructions 616) is provided to perform methods in accordance with various embodiments of the present disclosure. The computer-program product may be tangibly embodied in a non-transitory computer-readable medium (e.g., memory device(s) 612 or main memory 614). The instructions may be configured to cause one or more processors (e.g., processor(s) 604) to perform the methods described in the various embodiments.

In another aspect of the present disclosure, a non-transitory computer-readable medium (e.g., memory device(s) 612 or main memory 614) is provided. The non-transitory computer-readable medium may have instructions (e.g., instructions 616) stored therein that, when executed by one or more processors (e.g., processor(s) 604), cause the one or more processors to perform the methods described in the various embodiments.

The methods, systems, and devices discussed above are examples. For instance, in alternative configurations, the methods may be performed in an order different from that described, and/or various stages may be added and/or combined. Also, technology evolves and, thus, many of the elements are examples and do not limit the scope of the claims.

Specific details are given in the description to provide a thorough understanding of exemplary configurations including implementations. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques.

For example, the above elements may be components of a larger system. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes reference to one or more of such users, and reference to "a processor" includes reference to one or more processors and equivalents thereof known to those skilled in the art, and so forth.

Also, the words "comprise," "comprising," "contains," "containing," "include," "including," and "includes," when used in this specification and in the following claims, are intended to specify the presence of stated features, integers, components, or steps, but they do not preclude the presence or addition of one or more other features, integers, components, steps, acts, or groups.

It is also understood that the examples and embodiments described herein are for illustrative purposes only and that various modifications or changes in light thereof will be suggested to persons skilled in the art.

## Claims

1. A computer-implemented method of detecting an entrance point and an exit point for a site of interest using temporally-spaced satellite pings, the computer-implemented method comprising:
receiving satellite pings from a set of transmitting vehicles, each of the satellite pings indicating a location of a corresponding vehicle from the set of transmitting vehicles computed using global navigation satellite system, GNSS, signals received at the corresponding vehicle;
receiving a request from a vehicle for the entrance point and the exit point for the site of interest;
obtaining a geofence for the site of interest;
identifying a subset of the satellite pings that are within a set of cells along a border of the geofence;
compiling a list of entrance satellite pings and a list of exit satellite pings by, for each satellite ping of the subset of the satellite pings:
in response to determining that the satellite ping is preceded by a satellite ping for a same vehicle that is outside the geofence or is followed by a satellite ping for the same vehicle that is inside the geofence, adding the satellite ping to the list of entrance satellite pings; or
in response to determining that the satellite ping is preceded by a satellite ping for the same vehicle that is inside the geofence or is followed by a satellite ping for the same vehicle that is outside the geofence, adding the satellite ping to the list of exit satellite pings;
counting the satellite pings from the list of entrance satellite pings and the list of exit satellite pings that are within each of the set of cells to respectively produce counts of entrance satellite pings and counts of exit satellite pings; and
assigning the entrance point to a first cell from the set of cells and the exit point to a second cell from the set of cells respectively based on maximum values from the counts of entrance satellite pings and the counts of exit satellite pings.

2. The computer-implemented method of claim 1, wherein an average temporal resolution of the satellite pings is greater than one minute.

3. The computer-implemented method of claim 1 or 2, wherein the satellite pings are received from the set of transmitting vehicles over a time duration of at least one week.

4. The computer-implemented method of any one of the preceding claims, further comprising:
determining the set of cells along the border of the geofence such that each of the set of cells at least partially overlaps the border of the geofence.

5. The computer-implemented method of any one of the preceding claims, wherein obtaining the geofence for the site of interest includes retrieving the geofence from a maps database.

6. The computer-implemented method of any one of the preceding claims, wherein obtaining the geofence for the site of interest includes predicting the geofence using a trained machine-learning model using an overhead image of the site of interest.

7. The computer-implemented method of any one of the preceding claims, wherein a count for the first cell is a maximum value from the counts of entrance satellite pings and a count for the second cell is a maximum value from the counts of exit satellite pings.

8. The computer-implemented method of any one of the preceding claims, further comprising:
assigning a second entrance point to a third cell from the set of cells based on the maximum values from the counts of entrance satellite pings and the counts of exit satellite pings, wherein the entrance point is a first entrance point, and wherein a count for the third cell is within 50% of a count for the first cell; or
assigning a second exit point to a fourth cell from the set of cells based on the maximum values from the counts of entrance satellite pings and the counts of exit satellite pings, wherein the exit point is a first exit point, and wherein a count for the fourth cell is within 50% of a count for the second cell.

9. The computer-implemented method of any one of the preceding claims, further comprising:
determining a vehicle route for the vehicle based on the entrance point or the exit point for the site of interest.

10. The computer-implemented method of any one of the preceding claims, further comprising:
displaying the entrance point on a display of the vehicle.

11. The computer-implemented method of any one of the preceding claims, further comprising:
wirelessly transmitting the entrance point or the exit point to the vehicle.

12. The computer-implemented method of any one of the preceding claims, further comprising:
storing the entrance point and the exit point in a maps database.

13. The computer-implemented method of any one of the preceding claims, wherein the set of transmitting vehicles are semi-trailer trucks.

14. A non-transitory computer-readable medium comprising instructions that, when executed by one or more processors, cause the one or more processors to perform the method of any one of the preceding claims.

15. A system comprising:
one or more processors; and
a computer-readable medium comprising instructions that, when executed by the one or more processors, cause the one or more processors to perform the method of any one of claims 1-13.

## Patentansprüche

1. Computerimplementiertes Verfahren zum Erkennen eines Eintrittspunktes und eines Austrittspunktes für einen Ort von Interesse unter Verwendung von zeitlich beabstandeten Satelliten-Pings, wobei das computerimplementierte Verfahren umfasst:
Empfangen von Satelliten-Pings von einer Gruppe von sendenden Fahrzeugen, wobei jeder der Satelliten-Pings eine Position eines entsprechenden Fahrzeugs aus der Gruppe von sendenden Fahrzeugen anzeigt, berechnet unter Verwendung von Global-Navigation-Satellite-System-Signalen, GNSS-Signalen, die an dem entsprechenden Fahrzeug empfangen werden;
Empfangen einer Anforderung von einem Fahrzeug für den Eintrittspunkt und den Austrittspunkt für den Ort von Interesse;
Erhalten eines Geofence für den Ort von Interesse;
Identifizieren einer Untergruppe der Satelliten-Pings, die sich innerhalb einer Gruppe von Zellen entlang einer Grenze des Geofence befinden;
Erstellen einer Liste von Eintritts-Satelliten-Pings und einer Liste von Austritts-Satelliten-Pings durch, für jeden Satelliten-Ping der Untergruppe der Satelliten-Pings:
in Reaktion auf ein Bestimmen, dass dem Satelliten-Ping ein Satelliten-Ping für dasselbe Fahrzeug vorherging, das sich außerhalb des Geofence befindet, oder ein Satelliten-Ping für dasselbe Fahrzeug folgt, das sich innerhalb des Geofence befindet, Hinzufügen des Satelliten-Ping zu der Liste von Eintritts-Satelliten-Pings; oder
in Reaktion auf ein Bestimmen, dass dem Satelliten-Ping ein Satelliten-Ping für dasselbe Fahrzeug vorherging, das sich innerhalb des Geofence befindet, oder ein Satelliten-Ping für dasselbe Fahrzeug folgt, das sich außerhalb des Geofence befindet, Hinzufügen des Satelliten-Ping zu der Liste von Austritts-Satelliten-Pings;
Zählen der Satelliten-Pings aus der Liste von Eintritts-Satelliten-Pings und der Liste von Austritts-Satelliten-Pings, die sich innerhalb der Gruppe von Zellen befinden, um Zählwerte von Eintritts-Satelliten-Pings bzw. Zählwerte von Austritts-Satelliten-Pings zu erzeugen; und
Zuordnen des Eintrittspunktes zu einer ersten Zelle der Gruppe von Zellen bzw. des Austrittspunktes zu einer zweiten Zelle der Gruppe von Zellen auf Grundlage von Maximalwerten aus den Zählwerten der Eintritts-Satelliten-Pings und den Zählwerten der Austritts-Satelliten-Pings.

2. Computerimplementiertes Verfahren nach Anspruch 1, wobei eine mittlere zeitliche Auflösung der Satelliten-Pings größer als eine Minute ist.

3. Computerimplementiertes Verfahren nach Anspruch 1 oder 2, wobei die Satelliten-Pings von der Gruppe von sendenden Fahrzeugen über eine Zeitspanne von mindestens einer Woche empfangen werden.

4. Computerimplementiertes Verfahren nach einem der vorhergehenden Ansprüche, ferner umfassend:
Bestimmen der Gruppe von Zellen entlang der Grenze des Geofence derart, dass jede der Gruppe von Zellen zumindest teilweise die Grenze des Geofence überlappt.

5. Computerimplementiertes Verfahren nach einem der vorhergehenden Ansprüche, wobei das Erhalten des Geofence für den Ort von Interesse Abrufen des Geofence aus einer Kartendatenbank umfasst.

6. Computerimplementiertes Verfahren nach einem der vorhergehenden Ansprüche, wobei das Erhalten des Geofence für den Ort von Interesse Vorhersagen des Geofence unter Verwendung eines trainierten Maschinenlernmodells unter Verwendung eines Luftbildes des Ortes von Interesse umfasst.

7. Computerimplementiertes Verfahren nach einem der vorhergehenden Ansprüche, wobei ein Zählwert für die erste Zelle ein Maximalwert aus den Zählwerten der Eintritts-Satelliten-Pings ist und ein Zählwert für die zweite Zelle ein Maximalwert aus den Zählwerten der Austritts-Satelliten-Pings ist.

8. Computerimplementiertes Verfahren nach einem der vorhergehenden Ansprüche, ferner umfassend:
Zuordnen eines zweiten Eintrittspunktes zu einer dritten Zelle aus der Gruppen von Zellen auf Grundlage der Maximalwerte aus den Zählwerten der Eintritts-Satelliten-Pings und den Zählwerten der Austritts-Satelliten-Pings, wobei der Eintrittspunkt ein erster Eintrittspunkt ist und wobei ein Zählwert für die dritte Zelle innerhalb von 50 % eines Zählwertes für die erste Zelle liegt; oder
Zuordnen eines zweiten Austrittspunktes zu einer vierten Zelle aus der Gruppen von Zellen auf Grundlage der Maximalwerte aus den Zählwerten der Eintritts-Satelliten-Pings und den Zählwerten der Austritts-Satelliten-Pings, wobei der Austrittspunkt ein erster Austrittspunkt ist und wobei ein Zählwert für die vierte Zelle innerhalb von 50 % eines Zählwertes für die zweite Zelle liegt.

9. Computerimplementiertes Verfahren nach einem der vorhergehenden Ansprüche, ferner umfassend:
Bestimmen einer Fahrzeugroute für das Fahrzeug auf Grundlage des Eintrittspunktes oder des Austrittspunktes für den Ort von Interesse.

10. Computerimplementiertes Verfahren nach einem der vorhergehenden Ansprüche, ferner umfassend:
Anzeigen des Eintrittspunktes auf einer Anzeigevorrichtung des Fahrzeugs.

11. Computerimplementiertes Verfahren nach einem der vorhergehenden Ansprüche, ferner umfassend:
drahtloses Senden des Eintrittspunktes oder des Austrittspunktes an das Fahrzeug.

12. Computerimplementiertes Verfahren nach einem der vorhergehenden Ansprüche, ferner umfassend:
Speichern des Eintrittspunktes und des Austrittspunktes in einer Kartendatenbank.

13. Computerimplementiertes Verfahren nach einem der vorhergehenden Ansprüche, wobei es sich bei der Gruppe von sendenden Fahrzeugen um Sattelschlepper handelt.

14. Nicht-flüchtiges computerlesbares Medium, welches Anweisungen aufweist, die, wenn sie von einem oder mehreren Prozessoren ausgeführt werden, bewirken, dass der eine oder die mehreren Prozessoren das Verfahren nach einem der vorhergehenden Ansprüche durchführen.

15. System, aufweisend:
einen oder mehrere Prozessoren; und
ein computerlesbares Medium, welches Anweisungen aufweist, die, wenn sie von dem eine oder den mehreren Prozessoren ausgeführt werden, bewirken, dass der eine oder die mehreren Prozessoren das Verfahren nach einem der Ansprüche 1 bis 13 durchführen.

## Revendications

1. Procédé mis en œuvre par ordinateur pour détecter un point d'entrée et un point de sortie pour un site d'intérêt utilisant des pings satellites espacés dans le temps, procédé mis en œuvre par ordinateur comprenant :
la réception de pings satellites d'un ensemble de véhicules transmetteurs, chacun des pings satellites indiquant un emplacement d'un véhicule correspondant de l'ensemble de véhicules transmetteurs, calculé en utilisant des signaux d'un système mondial de navigation par satellite, GNSS, reçus sur le véhicule correspondant ;
la réception d'une demande d'un véhicule pour le point d'entrée et le point de sortie pour le site d'intérêt ;
l'obtention d'une barrière géographique virtuelle pour le site d'intérêt ;
l'identification d'un sous-ensemble des pings satellites qui se situent à l'intérieur d'un ensemble de cellules le long d'une frontière de la barrière géographique virtuelle ;
la compilation d'une liste de pings satellites d'entrée et d'une liste de pings satellites de sortie, pour chaque ping satellite du sous-ensemble de pings satellites, par :
en réponse à la détermination que le ping satellite est précédé d'un ping satellite pour un même véhicule qui est à l'extérieur de la barrière géographique virtuelle ou est suivi d'un ping satellite pour le même véhicule qui est à l'intérieur de la barrière géographique virtuelle, ajout du ping satellite à la liste de pings satellites d'entrée ; ou
en réponse à la détermination que le ping satellite est précédé d'un ping satellite pour le même véhicule qui est à l'intérieur de la barrière géographique virtuelle ou est suivi d'un ping satellite pour le même véhicule qui est à l'extérieur de la barrière géographique virtuelle, ajout du ping satellite à la liste de pings satellites de sortie ;
le comptage des pings satellites de la liste de pings satellites d'entrée et de la liste de pings satellites de sortie qui se situent à l'intérieur de chacune de l'ensemble de cellules pour produire respectivement des décomptes de pings satellites d'entrée et des décomptes de pings satellites de sortie ; et
l'assignation du point d'entrée à une première cellule de l'ensemble de cellules et le point de sortie à une seconde cellule de l'ensemble de cellules, basée respectivement sur des valeurs maximales des décomptes de pings satellites d'entrée et des décomptes de pings satellites de sortie.

2. Procédé mis en œuvre par ordinateur selon la revendication 1, dans lequel une résolution temporelle moyenne des pings satellites est supérieure à une minute.

3. Procédé mis en œuvre par ordinateur selon la revendication 1 ou 2, dans lequel les pings satellites sont reçus de l'ensemble de véhicules transmetteurs sur une période d'au moins une semaine.

4. Procédé mis en œuvre par ordinateur selon l'une quelconque des revendications précédentes, comprenant en outre :
la détermination de l'ensemble de cellules le long de la frontière de la barrière géographique virtuelle de manière à ce que chacune de l'ensemble de cellules chevauche au moins partiellement la frontière de la barrière géographique virtuelle.

5. Procédé mis en œuvre par ordinateur selon l'une quelconque des revendications précédentes, dans lequel l'obtention de la barrière géographique virtuelle pour le site d'intérêt inclut la récupération de la barrière géographique virtuelle d'une base de données de cartes.

6. Procédé mis en œuvre par ordinateur selon l'une quelconque des revendications précédentes, dans lequel l'obtention de la barrière géographique virtuelle pour le site d'intérêt inclut la prévision de la barrière géographique virtuelle en utilisant un modèle d'apprentissage automatique entraîné utilisant une image aérienne du site d'intérêt.

7. Procédé mis en œuvre par ordinateur selon l'une quelconque des revendications précédentes, dans lequel un décompte pour la première cellule est une valeur maximale des décomptes de pings satellites d'entrée et un décompte pour la seconde cellule est une valeur maximale des décomptes de pings satellites de sortie.

8. Procédé mis en œuvre par ordinateur selon l'une quelconque des revendications précédentes, comprenant en outre :
l'assignation d'un second point d'entrée à une troisième cellule de l'ensemble de cellules, basée sur les valeurs maximales des décomptes de pings satellites d'entrée et des décomptes de pings satellites de sortie, dans lequel le point d'entrée est un premier point d'entrée, et dans lequel un décompte pour la troisième cellule se situe dans 50 % d'un décompte pour la première cellule ; ou
l'assignation d'un second point de sortie à une quatrième cellule de l'ensemble de cellules, basée sur les valeurs maximales des décomptes de pings satellites d'entrée et des décomptes de pings satellites de sortie, dans lequel le point de sortie est un premier point de sortie, et dans lequel un décompte pour la quatrième cellule se situe dans 50 % d'un décompte pour la seconde cellule.

9. Procédé mis en œuvre par ordinateur selon l'une quelconque des revendications précédentes, comprenant en outre :
la détermination d'un trajet de véhicule pour le véhicule, basée sur le point d'entrée ou le point de sortie pour le site d'intérêt.

10. Procédé mis en œuvre par ordinateur selon l'une quelconque des revendications précédentes, comprenant en outre :
l'affichage du point d'entrée sur un écran du véhicule.

11. Procédé mis en œuvre par ordinateur selon l'une quelconque des revendications précédentes, comprenant en outre :
la transmission sans fil du point d'entrée ou du point de sortie au véhicule.

12. Procédé mis en œuvre par ordinateur selon l'une quelconque des revendications précédentes, comprenant en outre :
le stockage du point d'entrée et du point de sortie dans une base de données de cartes.

13. Procédé mis en œuvre par ordinateur selon l'une quelconque des revendications précédentes, dans lequel l'ensemble de véhicules transmetteurs sont des camions semi-remorques.

14. Support non transitoire lisible par ordinateur comprenant des instructions qui, lorsqu'elles sont exécutées par un ou plusieurs processeurs, font que l'un ou les plusieurs processeurs exécute(nt) le procédé selon l'une quelconque des revendications précédentes.

15. Système comprenant :
un ou plusieurs processeurs ; et
un support lisible par ordinateur comprenant des instructions qui, lorsqu'elles sont exécutées par l'un ou les plusieurs processeurs, font que l'un ou les plusieurs processeurs exécute(nt) le procédé selon l'une quelconque des revendications 1-13.
